# EUROPÄISCHE PATENTSCHRIFT

(11) **EP 0 783 987 B1**
(45) Veröffentlichungstag und Bekanntmachung des Hinweises auf die Patenterteilung: **12.04.2000**
(21) Anmeldenummer: 97100110.2
(22) Anmeldetag: 07.01.1997
(51) Int. Cl.: B60H 1/00, B61C 17/04, B61D 27/00

(54) **Heizungs- und Lüftungssystem für den Fahrerraum, insbesondere eines schienengebundenen Stadtbahnwagens**
Heating and ventilating system for the driver's compartment especially of a trackbound tramway
Système de chauffage et ventilation pour la cabine de conducteur, notamment d'un tramway sur rails

(30) Priorität: 15.01.1996 DE 29600512 U
(43) Veröffentlichungstag der Anmeldung: 16.07.1997
(73) Patentinhaber: Siemens Duewag Schienenfahrzeuge GmbH, 47829 Krefeld (DE)
(72) Erfinder: Kortemeyer, Alfred, 40721 Hilden (DE); Jochmann, Thomas, 47877 Willich (DE); Asbach, Friedhelm, 41564 Kaarst (DE)

(56) Entgegenhaltungen:
- CH-A- 279 143
- DE-C- 356 658
- DE-U- 9 209 573

## Beschreibung

Die Erfindung betrifft ein Heizungs- und Lüftungssystem für den Fahrerraum, insbesondere eines schienengebundenen Stadtbahnwagens, mit einem aus dem Dachbereich des Fahrzeugs bis hin zu einer Frontscheibe verlaufenden Luftkanal.

Die Aufgabe der Erfindung besteht darin, ein Heizungs- und Lüftungssystem mit den allgemein bekannten Gattungsmerkmalen zum Erzielen eines hohen Komforts für den Fahrer vor allem unter ergonomischen und klimatischen Gesichtspunkten zu verbessern.

Diese Aufgabe wird erfindungsgemäß dadurch gelöst, daß ein Abschnitt des Luftkanals als in Richtung auf einen Fahrersitz geneigte Fußstütze und im Sinne einer Fußbodenheizung für den Fahrer ausgebildet ist.

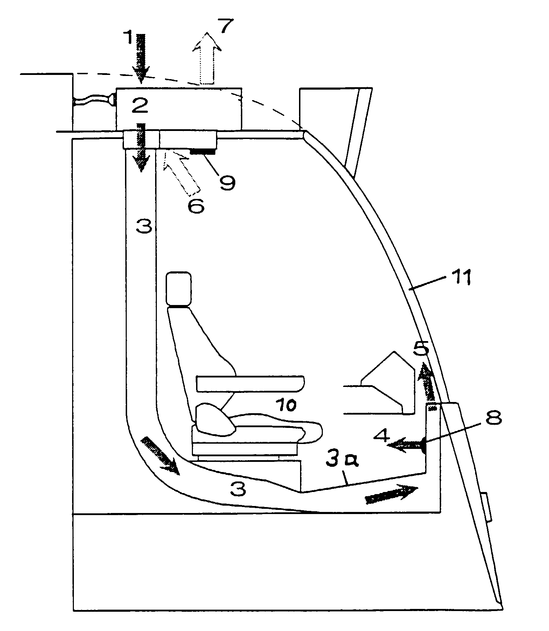

Ein Ausführungsbeispiel der Erfindung ist in der Zeichnung schematisch dargestellt und wird im folgenden näher beschrieben.

Im Dachbereich des Fahrzeugs ist ein kombiniertes Heizungs- und Lüftungsgerät 2 angeordnet, das zusätzlich mit einem Kältesatz ausgerüstet werden kann, so daß eine Klimaanlage entsteht. Äußere Frischluft 1 wird im Heizungs- und Lüftungsgerät 2 bei Bedarf temperiert und/oder mit Raumluft vermischt und in einen Luftkanal 3 geblasen.

Der teilweise in die Rückwand des Fahrerraumes integrierte Luftkanal 3 weist im weiteren einen Abschnitt 3a auf, der als in Richtung auf den Fahrersitz 10 geneigte Fußstütze und im Sinne einer Fußbodenheizung für den Fahrer ausgebildet ist. Diese geneigte Fußstütze erlaubt eine sehr bequeme Ruhestellung der Füße, wobei durch die ohne zusätzliche Mittel erreichte Beheizung keine Fußkälte eintreten kann.

Der Luftkanal 3 endet in Austrittsöffnungen 5 unterhalb der Frontscheibe 11 des Fahrzeugs, durch welche die Frontscheibe 11 und auch Seitenscheiben zum Enteisen und Trocknen angeblasen werden können. Ein frontseitiges Bedienelement 8 ermöglicht es dem Fahrer, die Luft auf die vorgenannten Austrittsöffnungen 5 und zusätzliche Fußraumdüsen 4 zu verteilen.

Die Umluft 6 des Fahrerraums wird dem Heizungs- und Lüftungsgerät 2 wieder zugeführt und dort über einen Auslaß 7 entweder abgeblasen oder nochmals in den Luftkanal 3 geleitet. Über Bedienelemente 9 am besagten Gerät 2 kann der Fahrer die gewünschte Raumtemperatur und die Luftmenge regeln sowie den Frischluft/Umluft-Anteil einstellen. Im Lüftungsbetrieb empfiehlt es sich, die Umluftrate völlig abzustellen, um eine hohe Frischluftzufuhr zu erhalten.

### Liste der Bezugszeichen

- 1: äußere Frischluft
- 2: Heizungs- und Lüftungsgerät
- 3: Luftkanal
- 3a: Abschnitt, als geneigte Fußstütze
- 4: Fußraumdüse
- 5: Austrittsöffnung
- 6: Umluft
- 7: Auslaß für Abluft
- 8: frontseitiges Bedienelement
- 9: Bedienelemente am Heizungs- und Lüftungsgerät
- 10: Fahrersitz
- 11: Frontscheibe

## Patentansprüche

1. Heizungs- und Lüftungssystem für den Fahrerraum, insbesondere eines schienengebundenen Stadtbahnwagens, mit einem aus dem Dachbereich des Fahrzeugs bis hin zu einer Frontscheibe (11) verlaufenden Luftkanal (3), dadurch gekennzeichnet, daß ein Abschnitt (3a) des Luftkanals (3) als in Richtung auf einen Fahrersitz (10) geneigte Fußstütze und im Sinne einer Fußbodenheizung für den Fahrer ausgebildet ist.

## Claims

1. A heating and ventilation system for the driver's compartment particularly of a municipal rail vehicle, with a ventilating duct (3) extending from the roof region of the vehicle to a front windscreen (11), characterised in that a portion (3a) of the ventilating duct (3) is designed as a foot rest inclined towards a driver's seat (10) for the purpose of floor heating for the driver.

## Revendications

1. Système de chauffage et de ventilation pour la cabine de conducteur, notamment d'un véhicule de transport urbain sur rails, avec un conduit d'air (3) s'étendant depuis la région du toit du véhicule jusqu'à un pare-brise (11), **caractérisé** en ce qu'un tronçon (3a) du conduit d'air (3) est conçu comme repose-pieds incliné en direction d'un siège de conducteur (10) et au sens d'un plancher chauffant pour le conducteur.
